# EUROPÄISCHE PATENTANMELDUNG

(11) **EP 1 161 885 A1**
(43) Veröffentlichungstag der Anmeldung: **12.12.2001**
(21) Anmeldenummer: 00122941.8
(22) Anmeldetag: 21.10.2000
(51) Int. Cl.: A23L 1/317, A23L 1/325

(54) **Diät-Nahrungsmittel und Verfahren zu dessen Herstellung**

(30) Priorität: 10.06.2000 DE 10028919
(71) Anmelder: Choe, Daniel, 64372 Ober-Ramstadt (DE); Kim, Jin-Min, 61440 Oberursel (DE)
(72) Erfinder: Choe, Daniel, 64372 Ober-Ramstadt (DE)

(57) **Zusammenfassung**

Die Erfindung betrifft ein Diät-Nahrungsmittel und ein Verfahren zu dessen Herstellung.

Aufgabe der Erfindung ist es, ein Diät-Nahrungsmittel und ein Verfahren zu dessen Herstellung zu schaffen, das insbesondere wertvolle Nahrungsbestandteile enthält und den Körperhaushalt eines Menschen spürbar verbessert.

Gelöst wird das dadurch, indem das Diät-Nahrungsmittel mit einer eine Masse aufnehmenden Hülle, welche endseitig verschlossen ist, gebildet ist und die Masse eine erste Komponente von ausschließlich zerkleinertem Fischfleisch 4 als größten Anteil und wenigstens eine zweite Komponente mit deutlich geringerem Anteil an Gewürzen mit Fischfond und Salz sowie eine weitere Komponente aus Speck 8 aufweist.

## Beschreibung

Die Erfindung betrifft ein Diät-Nahrungsmittel und ein Verfahren zu dessen Herstellung nach dem Oberbegriff der unabhängigen Ansprüche.

Ein Diät-Nahrungsmittel dieser Art ist beispielsweise als an Kalorien reduzierte und/oder an Fett reduzierte Wurst bekannt. Eine derartige Wurst ist in bekannter Weise mit einer die Wurstmasse aufnehmenden Hülle versehen. Bevorzugt ist die Hülle der Wurst zylindrisch ausgebildet und ist endseitig verschlossen.

Von Nachteil ist hierbei, dass ein derartiges Nahrungsmittel häufig nicht besonders schmackhaft ist und/oder zu viel einen menschlichen Organismus belastendes Salz bzw. Fett aufweist und somit ein weniger gesundes Nahrungsmittel darstellt.

Der Erfindung liegt die Aufgabe zu Grunde, ein Diät-Nahrungsmittel und ein Verfahren zu dessen Herstellung der eingangs genannten Art zu scharfen, das die genannten Nachteile vermeidet, das insbesondere wertvolle Nahrungsbestandteile enthält und den Körperhaushalt eines Menschen spürbar verbessert.

Die Aufgabe wird erfindungsgemäß durch die Ausbildungsmerkmale der unabhängigen Ansprüche gelöst. Weiterbildungen ergeben sich aus den abhängigen Ansprüchen.

Ein erster Vorteil des erfindungsgemäßen Diät-Nahrungsmittels ist darin begründet, dass dieses - bezogen auf eine Gesamtmenge des Nahrungsmittels - einen größten Anteil an Fischfleisch aufweist. Der Begriff Fischfleisch bezieht sich dabei auf Fleisch vom Fisch als auch auf Fleisch von Schalen- bzw. Krustentieren. Dieses Fischfleisch ist sehr gesund und ergibt in Kombination mit weiteren Zutaten (Komponenten) ein besonders schmackhaftes Diät-Nahrungsmittel. Insbesondere durch den Einsatz von Fischfleisch, vorzugsweise von Salzwasserfischfleisch, weist dieses Nahrungsmittel wertvolle Bestandteile, wie beispielsweise hochwertiges Eiweiß, für die Versorgung des Menschen mit lebensnotwendigen essentiellen Aminosäuren auf.

Ebenso vorteilhaft ist, dass das Fischfleisch wichtige Vitamine, beispielsweise A und D sowie Vitamine des B-Komplexes, aufweist. Außerdem ist das Fischfleisch reich an Mineralstoffen und Spurenelementen wie Calcium, Eisen, Jod, Phosphor und Magnesium. Dabei ist für einen Menschen bei mehrmaligem Genuss dieses Nahrungsmittels pro Woche eine optimale Versorgung mit Jod erzielbar. Bekanntlich kann es bei einem Mangel von Jod zu Schilddrüsenstörungen kommen. Des weiteren beugen bekanntlich die mehrfach ungesättigten Fettsäuren im Fischfleisch möglichen Herzinfarkten vor und senken den Cholesterinspiegel im Blut.

Weiterhin ist von Vorteil, dass das Diät-Nahrungsmittel bevorzugt weitere Anteile von Gemüse und/oder Fleisch, beispielsweise vom Huhn, Pute, Rind, Schwein, Lamm, Pferd, aufweist. Diese Anteile sind grundsätzlich geringer als der bereits genannte Anteil an Fischfleisch. Zusätzlich sind anteilig Gewürze (z.B. Pfeffer etc.), Salz (z.B. Diät-Salz) und/oder Kräuter (z.B. Dill, Petersilie etc.), Phosphat sowie bevorzugt ein Fischfond Bestandteil des Diät-Nahrungsmittels, welche den geringsten Anteil an der Gesamtmenge bilden.

In vorteilhafter Weise ist ferner das Diät-Nahrungsmittel, zumindest bestehend aus einem größeren Anteil an Fischfleisch und Gewürzen mit Fond, bevorzugt Phosphat und Salz ausgebildet, in einer Hülle jeglicher Art gut verschlossen aufgenommen.

Ein weiterer Vorteil ist darin begründet, dass das Fischfleisch sowie je nach Zusammensetzung die weiteren Bestandteile in zerkleinerter Form das Diät-Nahrungsmittel bilden. Die zerkleinerte Form schließt auch beispielsweise eine pulverisierte Ausführung von Fischfleisch bzw. Anteilen davon ein. Damit ist auch je nach Zusammensetzung eine gute Schnitt- bzw. Streichfähigkeit des Diät-Nahrungsmittels erzielbar.

Schließlich ist es von Vorteil, dass das Diät-Nahrungsmittel in einer bevorzugten Ausbildung Zitrone enthält, um den Geschmack abzurunden und möglicherweise auftretenden Fischgeruch spürbar zu reduzieren.

Das Diät-Nahrungsmittel ist dabei nicht auf eine Hülle in Wurstform beschränkt. Vielmehr ist das Diät-Nahrungsmittel auch in Hüllen von Beuteln oder Dosen bzw. Gläsern einsetzbar.

Die Erfindung soll an einem Ausführungsbeispiel näher erläutert werden. Dabei zeigt schematisch:

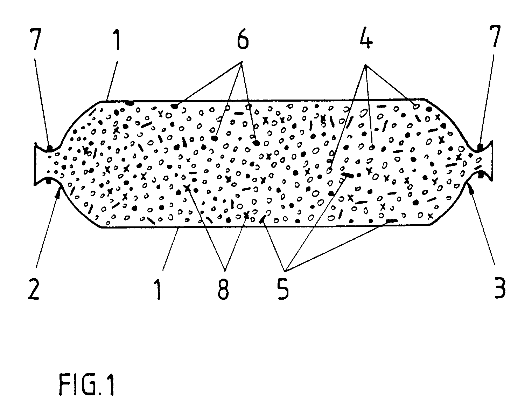

- Fig. 1: ein Diät-Nahrungsmittel in Form von Fischwurst (Schnitt).

In einer ersten Ausbildung basiert das Diät-Nahrungsmittel auf einer Masse, die eine erste Komponente von ausschließlich zerkleinertem, vorzugsweise feingekuttertem, Fischfleisch 4, bevorzugt von Salzwasserfischen, beispielsweise Seelachs, als größten Anteil aufweist. Weiterhin weist das Diät-Nahrungsmittel eine zweite Komponente mit deutlich geringerem Anteil zumindest an Gewürzen mit Salz und bevorzugt Fischfond auf. In einer Weiterbildung enthält die zweite Komponente zusätzlich Phosphat. In einer bevorzugten Ausbildung besteht das zerkleinerte Fischfleisch 4 (erste Komponente) vollständig aus Salzwasserfisch, bevorzugt Seelachs oder enthält zumindest Seelachs. Ebenso ist eine dritte Komponente aus zerkleinertem Speck 8, bevorzugt Schweinespeck, enthalten, die anteilig geringer als die erste Komponente ist, jedoch größer als die zweite Komponente ist.

In einer zweiten Ausbildung basiert das Diät-Nahrungsmittel auf einer Masse, die eine erste Komponente von zerkleinertem, vorzugsweise feingekuttertem, Fischfleisch 4, bevorzugt von Seelachs, als größten Anteil aufweist. Weiterhin eine zweite Komponente mit deutlich geringerem Anteil an Gewürzen mit Fischfond und Salz und mit oder ohne Phosphat aufweist und eine dritte Komponente von zerkleinertem Gemüse 5, beispielsweise Möhre, Lauch, Zwiebel, und/oder zerkleinertem sonstigen Fleisch 6, beispielsweise vom Huhn, Pute, Rind, Schwein, Lamm, Pferd, aufweist. Diese Anteile von Gemüse 5 und /oder Fleisch 6 (dritte Komponente) sind grundsätzlich geringer als der bereits genannte Anteil an Fischfleisch 4 (erste Komponente), jedoch größer als der Anteil an Gewürzen mit Fischfond und Salz sowie bei Bedarf Phosphat (zweite Komponente). Das Gemüse 5 bzw. das Fleisch 6 ist ebenso bevorzugt feingekuttert.
Bevorzugt ist das Gemüse 5 bzw. das Fleisch 6 aus einer einzigen Gemüseart bzw. Fleischart oder aus einer Kombination von mehreren Arten von Gemüse 5 bzw. Fleisch 6 gebildet.

In der ersten oder der zweiten Ausbildung sind zusätzliche Gewürze und/oder Kräuter (z.B. Dill, Petersilie etc.) in zerkleinerter Form dem Diät-Nahrungsmittels als Ergänzungsmaterialien hinzufügbar.

In der ersten und der zweiten Ausbildung ist als vierte Komponente zusätzlich Speck 8, vorzugsweise Schweinespeck einsetzbar. Der Speck 8 ist ebenfalls zerkleinert, bevorzugt feingekuttert. Der Anteil an Speck 8 (vierte Komponente des Diät-Nahrungsmittels) ist deutlich geringer als der Anteil an Fischfleisch 4 als erste Komponente.
In der zweiten Ausbildung ist der Anteil an Speck 8 (vierte Komponente) geringer als der Anteil von Gemüse 5 und/oder Fleisch 6 (dritte Komponente).

In vorteilhafter Weise ist das Diät-Nahrungsmittel in erster oder zweiter Ausbildung in einer Hülle 1 gut verschließbar aufgenommen. Die Hülle 1 ist im vorliegenden Beispiel zylindrisch ausgebildet und weist ein erstes Ende 2 und ein zweites Ende 3 auf, wobei die Hülle 1 endseitig mittels je einem Verschluss 7 verschlossen ist. Innerhalb der Hülle 1 ist somit die nach der ersten oder zweiten Ausbildung erstellte Masse gut verschlossen aufgenommen. Die Masse liegt in jeder Zusammensetzung (erste bzw. zweite Ausbildung) in zerkleinerter Form vor und kann auch pulverisierte Anteile enthalten. Als Hülle 1 eignet sich bevorzugt ein Kunstdarm oder ein Naturdarm.

Zur Geschmacksabrundung und Verhinderung des möglicherweise Auftretens von Fischgeruch ist in jeder Ausbildung ein geringer Anteil an Zitrone, vorzugsweise als Zitronensaft, zugesetzt.

Eine erste bevorzugte Rezeptur für ein fischhaltiges Diät-Nahrungsmittel ergibt sich beispielsweise wie folgt bei einer Gesamtmenge von ca. 10 kg (100%):
- ca. 70 %: Salzwasserfisch, beispielsweise Seelachs, als Fischfleisch 4 (erste Komponente),
- ca. 26 %: Schweinespeck als Speck 8 (vierte Komponente);
- ca. 4 %: Salz, Pfeffer, Phosphat und Fischfond (zweite Komponente) .

Eine zweite bevorzugte Rezeptur für ein derartiges Diät-Nahrungsmittel ergibt sich wie folgt bei einer Gesamtmenge von ca. 10 kg (100 %):
- ca. 50 %: Seelachs als Fischfleisch 4 (erste Komponente),
- ca. 28 %: Putenfleisch als Fleisch 6 (dritte Komponente),
- ca. 18 %: Speck 8, vorzugsweise Schweinespeck, (vierte Komponente),
- ca. 2 %: Salz,
- ca. 0,5 %: Pfeffer
- ca. 0,5 %: Phosphat, zweite Komponente
- ca. 1 %: Fischfond.

Diese beispielhaft genannten Rezepturen sind alternativ durch Ergänzungsstoffe erweiterbar. So ist unter bevorzugter Beibehaltung der etwaigen Prozentanteile der einzelnen Komponenten an der Gesamtmenge von 100 % beispielsweise der Anteil an Putenfleisch (dritte Komponente) durch ein anderes Fleisch 6 und/oder Gemüse 5 - entsprechend der o.g. Materialien - austauschbar bzw. unter Berücksichtigung der prozentualen Verhältnisse ergänzbar.

Dabei sind die Anteile der Komponenten im Verhältnis zur Gesamtmenge grundsätzlich in folgender Abstufung beizubehalten:
- die erste Komponente (Fischfleisch 4) weist stets den Hauptanteil auf,
- die dritte Komponente (Gemüse 5 und/oder Fleisch 6) ist - falls vorhanden - anteilig weniger als die erste Komponente, jedoch größer als die vierte Komponente (Speck 8), und
- die vierte Komponente ist kleiner als die dritte (falls vorhanden), jedoch größer als die zweite Komponente (Gewürze, Fischfond, Salz, Phosphat).

Die Herstellung des Diät-Nahrungsmittels erfolgt nach folgenden Schritten:
Das Fischfleisch 4 (erste Komponente) wird in tiefgefrorenem Zustand feingeschnitten (gekuttert), das Fleisch 6 (dritte Komponente) wird in frischem Zustand feingeschnitten (gekuttert), der Speck 8, vorzugsweise Schweinespeck, (vierte Komponente) wird in frischem Zustand feingeschnitten (gekuttert), alle Zutaten werden unter Zusatz von Salz, Pfeffer, Phosphat, Fischfond (zweite Komponente) gemischt und beispielsweise bei etwa 70° C gebrüht und in die Hülle 1 gefüllt.

In einer weiteren anschließenden Herstellung wird das derart erzeugte Diät-Nahrungsmittel in einer Räuchereinrichtung, beispielsweise unter Verwendung von Buchenholz, geräuchert. Damit wird eine spezielle Geschmacksrichtung erzielt und die Haltbarkeit des Diät-Nahrungsmittels verlängert.

Die Ausbildung des Diät-Nahrungsmittels ist nicht auf die Ausführung mit der Hülle 1 und den beiden Enden 2,3 beschränkt. Vielmehr ist das Diät-Nahrungsmittel auch mit einer Hülle 1 in Beutelform mit einem ersten Ende 2 und einem Verschluss 7 ausführbar. Alternativ ist das Diät-Nahrungsmittel auch in einer Hülle 1 als Dose mit einem Verschluss 7 ausführbar.

In einer dritten Ausbildung basiert das Diät-Nahrungsmittel auf einer Masse, die als Grundbret, d.h. als Ausgangsmaterial, für eine als Diät-Nahrungsmittel ausgebildete Fischwurst dient.
Ein derartiges Grundbret besteht zumindest aus:
- einer ersten Komponente an Fischfleisch 4, insbesondere Salzwasserfisch wie Seelachs,
- einer zweiten Komponente von Fleisch 6, insbesondere Geflügelfleisch,
- einer dritten Komponente von Speck 8, insbesondere Schweinespeck, und
- einer vierten Komponente an Gewürzen (Pfeffer, Salz, Phosphat) etc..

Das Fischfleisch 4 weist hierbei wiederum den größten Anteil auf, das Fleisch 6, insbesondere Geflügelfleisch, weist (bezogen auf das Fischfleisch 4) einen geringeren Anteil auf und der Speck 8, insbesondere Schweinespeck, weist (bezogen auf das Fleisch 6) einen geringeren Anteil am Grundbret auf und die Gewürze (vierte Komponente) weisen den geringsten Anteil auf.

Eine bevorzugte Rezeptur für ein derartiges Diät-Nahrungsmittel ergibt sich beispielhaft wie folgt, bezogen auf eine Gesamtmenge von ca. 10 kg (100%):
- ca. 49,2 %: Fischfleisch 4, vorzugsweise Seelachs,
- ca. 34,0 %: Fleisch 6, insbesondere Pute als Geflügelfleisch,
- ca. 14,0 %: Speck 8, insbesondere Schweinespeck,
- ca. 2,0 %: Salz, vorzugsweise Pökel- oder Jodsalz,
- ca. 0,4 %: Pfeffer, und
- ca. 0,4 %: Phosphat.
Bei Bedarf ist bei dieser Gesamtmenge ein Anteil an Fischfond von ca. 1% hinzufügbar. Die o.g. Anteile der Rezeptur verändern sich dabei geringfügig in Hinblick auf die Gesamtsumme von 100 %. Die Prozentangaben sind insbesondere als Anhaltspunkte aufgeführt und sind in den Anteilen der Komponenten (einzeln oder gemeinsam) variierbar.

Die Herstellung des Diät-Nahrungsmittels in Form von Fischwurst erfolgt in folgenden Schritten:
Das Fischfleisch 4 wird in tiefgefrorenem Zustand feingeschnitten (gekuttert), das Fleisch 6 sowie der Speck 8 werden in frischem oder gefrorenem Zustand feingeschnitten (gekuttert), alle Zutaten werden unter Zugabe von Salz, Pfeffer, Phosphat und bei Bedarf Fischfond gemischt und bei einer vorherbestimmten Temperatur (je nach Verwendung) gebrüht und in eine Hülle 1 oder ein Behältnis abgefüllt.

Basierend auf dem Grundbret gemäß der dritten Ausbildung ist eine vierte Ausbildung des Diät-Nahrungsmittels erzielbar. Ausgehend von dem o.g. Grundbret (beispielsweise ca. 49,2 % Fischfleisch 4, ca. 34 % Fleisch 6 (Pute), ca. 14 % (Schweine-) Speck 8, ca. 2% Salz, je ca. 0,4 % Pfeffer und Phosphat) ist zusätzlich zu dieser Menge bis zu 50 % eine grobe Fleischeinlage durch Vermischen hinzufügbar, um entsprechende Geschmacksnuancen zu erzielen. Als Fleischeinlage dient Fisch (Fischfleisch 4) und/oder Geflügelfleisch (vorzugsweise Pute), so dass damit eine Gesamtmenge von bis zu 15 kg erreichbar ist.

Basierend auf dem Grundbret gemäß der dritten Ausbildung ist eine fünfte Ausbildung des Diät-Nahrungsmittels erzielbar. Ausgehend von dem o.g. Grundbret (beispielsweise ca. 49,2 % Fischfleisch 4, ca. 34 % Fleisch 6 (Pute), ca. 14 % (Schweine-) Speck 8, ca. 2% Salz, je ca. 0,4 % Pfeffer und Phosphat) ist zusätzlich zu dieser Menge von 10 kg bis zu 50 % eine weitere Einlage durch Vermischen hinzufügbar, um entsprechende Geschmacksnuancen zu erzielen. Als Einlage sind verschiedene - je nach gewünschter Geschmacksrichtung - Materialien einsetzbar. Jede Einlage ist bevorzugt einzeln zum Grundbret von 10 kg zusätzlich durch Mischen hinzufügbar und nachstehend sind bevorzugte Rezepturen aufgestellt:
1. Grundbret (dritte Ausbildung) plus Champignons von bis zu 50 %, vorzugsweise 25 - 50%.
2. Grundbret (dritte Ausbildung) plus Oliven von bis zu 20 %, vorzugsweise 5 - 20 %.
3. Grundbret (dritte Ausbildung) plus Pistazien von bis zu 20 %, vorzugsweise 5 - 20 %.
4. Grundbret (dritte Ausbildung) plus Eier von bis zu 45 %, vorzugsweise 15 - 45 %.
5. Grundbret (dritte Ausbildung) plus Käse von bis zu 45 %, vorzugsweise15-45 %.
6. Grundbret (dritte Ausbildung) plus Algen, vorzugsweise (frischer oder getrockneter) Seetang, von bis zu 10 %, vorzugsweise 2 - 10 %.
7. Grundbret (dritte Ausbildung) plus Pfefferkörner (bevorzugt grüne) von bis zu 10 %, vorzugsweise 2 - 10 %.
8. Grundbret (dritte Ausbildung) plus Kaviar und/oder Hummer von bis zu 10 %, vorzugsweise 2 - 10 %.
9. Grundbret (dritte Ausbildung) plus Räucherlachs von bis zu 25 %, vorzugsweise 5 - 25 %.
10. Grundbret (dritte Ausbildung) plus (frische oder getrocknete) Kräuter von bis zu 10 %, vorzugsweise 2 - 10 %.

Bei vorstehenden Rezepturen ergibt sich somit die Gesamtmenge, beispielsweise gemäß Punkt 1, von 12,5 kg bis 15 kg (10 kg Grundbret und 2,5 -5,0 kg Champignons).

### Bezugszeichenliste

- 1 -: Hülle
- 2 -: erstes Ende
- 3 -: zweites Ende
- 4 -: Fischfleisch
- 5 -: Gemüse
- 6 -: Fleisch
- 7 -: Verschluss
- 8 -: Speck

## Patentansprüche

1. Diät-Nahrungsmittel mit einer eine Masse aufnehmenden, endseitig verschlossenen Hülle,
**dadurch gekennzeichnet,**
**dass** die Masse eine erste Komponente von ausschließlich zerkleinertem Fischfleisch (4) als größten Anteil, weiterhin zerkleinerten Speck (8) als vierte Komponente mit geringerem Anteil und mit geringstem Anteil eine zweite Komponente zumindest aus Gewürzen mit Fischfond, und Salz aufweist.

2. Diät-Nahrungsmittel mit einer eine Masse aufnehmenden, endseitig verschlossenen Hülle,
**dadurch gekennzeichnet,**
**dass** die Masse die erste Komponente von zerkleinertem Fischfleisch (4) als größten Anteil aufweist, weiterhin zerkleinerten Speck (8) als vierte Komponente mit geringerem Anteil aufweist und eine zweite Komponente, zumindest aus Gewürzen mit Fischfond und Salz mit geringstem Anteil gebildet, aufweist und zusätzlich eine dritte Komponente aus zerkleinertem Gemüse (5 ) und/oder zerkleinertem sonstigen Fleisch (6) aufweist, wobei dieser Anteil (dritte Komponente) grundsätzlich geringer als der Anteil der ersten Komponente, jedoch größer als der Anteil der vierten Komponente ist.

3. Diät-Nahrungsmittel mit einer eine Masse aufnehmenden, endseitig verschlossenen Hülle,
**dadurch gekennzeichnet,**
**dass** die Masse aus einem Grundbret gebildet ist,
**dass** das Grundbret zumindest aus:
- einer ersten Komponente an Fischfleisch (4),
- einer zweiten Komponente von Fleisch (6), insbesondere Geflügelfleisch,
- einer dritten Komponente von Speck (8), insbesondere Schweinespeck, und
- einer vierten Komponente an Gewürzen (Pfeffer, Salz, Phosphat etc.) gebildet ist, wobei das Fischfleisch (4) den größten Anteil aufweist, das Fleisch (6), insbesondere Geflügelfleisch, zum Fischfleisch einen geringeren Anteil aufweist, der Speck (8), insbesondere Schweinespeck, zum Fleisch (6) den geringeren Anteil und die Gewürze (Pfeffer, Salz, Phosphat etc.) den geringsten Anteil am Grundbret aufweisen.

4. Diät-Nahrungsmittel nach Anspruch 3,
**dadurch gekennzeichnet,**
**dass** das Grundbret ein geringen Anteil (ca. 1 %) an Fischfond aufweist.

5. Diät-Nahrungsmittel nach Anspruch 3 oder 3 und 4,
**dadurch gekennzeichnet,**
**dass** das Grundbret zusätzlich zu dessen Menge bis zu 50 % einer groben Fleischeinlage, vorzugsweise Fischfleisch (4) und/oder Geflügelfleisch, aufweist.

6. Diät-Nahrungsmittel nach wenigstens Anspruch 3 oder 3 und 4,
**dadurch gekennzeichnet,**
**dass** das Grundbret zusätzlich bis zu 50 % Champignons aufweist.

7. Diät-Nahrungsmittel nach wenigstens Anspruch 3 oder 3 und 4,
**dadurch gekennzeichnet,**
**dass** das Grundbret zusätzlich bis zu 20 % Oliven aufweist.

8. Diät-Nahrungsmittel nach wenigstens Anspruch 3 oder 3 und 4,
**dadurch gekennzeichnet,**
**dass** das Grundbret zusätzlich bis zu 20 % Pistazien aufweist.

9. Diät-Nahrungsmittel nach wenigstens Anspruch 3 oder 3 und 4,
**dadurch gekennzeichnet,**
**dass** das Grundbret zusätzlich bis zu 45 % Eier aufweist.

10. Diät-Nahrungsmittel nach wenigstens Anspruch 3 oder 3 und 4,
**dadurch gekennzeichnet,**
**dass** das Grundbret zusätzlich bis zu 45 % Käse aufweist.

11. Diät-Nahrungsmittel nach wenigstens Anspruch 3 oder 3 und 4,
**dadurch gekennzeichnet,**
**dass** das Grundbret zusätzlich bis zu 10 % Algen, vorzugsweise frischen oder getrockneten Seetang, aufweist.

12. Diät-Nahrungsmittel nach wenigstens Anspruch 3 oder 3 und 4,
**dadurch gekennzeichnet,**
**dass** das Grundbret zusätzlich bis zu 10 % Pfefferkörner aufweist.

13. Diät-Nahrungsmittel nach wenigstens Anspruch 3 oder 3 und 4,
**dadurch gekennzeichnet,**
**dass** das Grundbret zusätzlich bis zu 10 % Kaviar und/oder Hummer aufweist.

14. Diät-Nahrungsmittel nach wenigstens Anspruch 3 oder 3 und 4,
**dadurch gekennzeichnet,**
**dass** das Grundbret zusätzlich bis zu 25 % Räucherlachs aufweist.

15. Diät-Nahrungsmittel nach wenigstens Anspruch 3 oder 3 und 4,
**dadurch gekennzeichnet,**
**dass** das Grundbret zusätzlich bis zu 10 % frische oder getrocknete Kräuter aufweist.

16. Diät-Nahrungsmittel nach einem der Ansprüche 1 bis 3,
**dadurch gekennzeichnet,**
**dass** das zerkleinerte Fischfleisch (4) aus Salzwasserfisch gebildet ist oder zumindest Salzwasserfisch enthält.

17. Diät-Nahrungsmittel nach einem der Ansprüche 1 bis 3,
**dadurch gekennzeichnet,**
**dass** das Fischfleisch (4) Seelachs ist oder enthält.

18. Diät-Nahrungsmittel nach Anspruch 2,
**dadurch gekennzeichnet,**
**dass** die Masse ca. 50 % Seelachs als Fischfleisch (4), ca. 28 % Putenfleisch als Fleisch (6), ca. 18 % Speck (8), ca. 2 % Salz, ca. 0,5 % Pfeffer, ca. 0,5 % Phosphat und ca. 1 % Fischfond aufweist.

19. Verfahren zur Herstellung eines Diät-Nahrungsmittels,
**dadurch gekennzeichnet,**
**dass** ein Fischfleisch (4) in tiefgefrorenem Zustand feingeschnitten (gekuttert) wird, dass Fleisch (6), vorzugsweise Puten-, Hühner-, Schweine-, Rind-, Lamm- bzw. Pferdefleisch, in frischem Zustand feingeschnitten (gekuttert) wird, dass Speck (8), vorzugsweise Schweinespeck, in frischem Zustand feingeschnitten (gekuttert) wird, dass anschließend alle Zutaten unter Zusatz von zumindest Salz, Pfeffer gemischt, gebrüht und in eine Hülle (1) gefüllt werden.

20. Verfahren nach Anspruch 19,
**dadurch gekennzeichnet,**
**dass** alle Zutaten unter Beigabe von Fischfond gemischt werden.
